# EUROPÄISCHE PATENTANMELDUNG

(11) **EP 4 686 838 A1**
(43) Veröffentlichungstag der Anmeldung: **04.02.2026**
(21) Anmeldenummer: 25189059.6
(22) Anmeldetag: 11.07.2025
(51) Int. Cl.: F16B 12/04, F16B 12/26

(54) **VERBINDER, ANORDNUNG, VERFAHREN ZUM VERBINDEN UND VERWENDUNG EINES VERBINDERS**

(30) Priorität: 01.08.2024 DE 102024121931
(71) Anmelder: Adolf Würth GmbH & Co. KG, 74653 Künzelsau (DE)
(72) Erfinder: BAUER, Eugen, 74564 Crailsheim (DE); BECK, Daniel, 69168 Wiesloch (DE)
(74) Vertreter: Patentanwälte Ruff, Wilhelm, Beier, Dauster & Partner mbB

(57) **Zusammenfassung**

Die Erfindung betrifft einen Verbinder zum Verbinden eines ersten Bauteils und eines zweiten Bauteils, insbesondere ausgebildet als Verleimhilfe zum Verbinden der Bauteile während des Verfestigens eines Klebstoffs im Bereich einer Klebefläche, wobei der Verbinder wenigstens zwei erste Klemmflächen und wenigstens zwei zweite Klemmflächen aufweist, wobei jede der Klemmflächen an jeweils einem federnden Arm angeordnet ist, wobei die ersten Klemmflächen der Verbinder an wenigstens einem Hinterschnitt des ersten Bauteils und die zweiten Klemmflächen an wenigstens einem Hinterschnitt des zweiten Bauteils eingreifen können, wobei die Verbinder und die Hinterschnitte im verbundenen Zustand der beiden Bauteile nicht von außerhalb der Bauteile sichtbar sind und wobei der Verbinder als einteiliges Bauteil, insbesondere als Kunststoffbauteil, ausgebildet ist.

## Beschreibung

Die Erfindung betrifft einen Verbinder zum Verbinden eines ersten Bauteils und eines zweiten Bauteils, insbesondere ausgebildet als Verleimhilfe zum Verbinden der Bauteile während des Verfestigens eines Klebstoffs im Bereich einer Klebefläche. Die Erfindung betrifft auch eine Anordnung mit zwei Bauteilen und einem erfindungsgemäßen Verbinder, ein Verfahren zum Verbinden eines ersten Bauteils und eines zweiten Bauteils sowie eine Verwendung eines erfindungsgemäßen Verbinders.

Mit der Erfindung sollen ein Verbinder, eine Anordnung, ein Verfahren und eine Verwendung verbessert werden.

Erfindungsgemäß ist hierzu ein Verbinder mit den Merkmalen von Anspruch 1, eine Anordnung mit den Merkmalen von Anspruch 12, ein Verfahren mit den Merkmalen von Anspruch 16 bzw. eine Verwendung mit den Merkmalen von Anspruch 17 vorgesehen. Vorteilhafte Weiterbildungen der Erfindung sind in den jeweiligen Unteransprüchen angegeben.

Ein Verbinder zum Verbinden eines ersten Bauteils und eines zweiten Bauteils ist insbesondere als Verleimhilfe zum Verbinden der Bauteile während des Verfestigens eines Klebstoffs im Bereich einer Klebefläche ausgebildet. Der Verbinder weist wenigstens zwei erste Klemmflächen und wenigstens zwei zweite Klemmflächen auf. Jede der Klemmflächen ist an jeweils einem federnden Arm angeordnet. Die ersten Klemmflächen der Verbinder können an wenigstens einem Hinterschnitt des ersten Bauteils und die zweiten Klemmflächen an wenigstens einem Hinterschnitt des zweiten Bauteils eingreifen. Die Verbinder und die Hinterschnitte sind im verbundenen Zustand der beiden Bauteile nicht von außerhalb der Bauteile sichtbar. Der Verbinder ist als einteiliges Bauteil, insbesondere als Kunststoffbauteil, ausgebildet.

Mit der Erfindung wird ein Verbinder bereitgestellt, der eine unsichtbare Verbindung zwischen zwei Bauteilen herstellen kann und der insbesondere als Verleimhilfe zum Verbinden der Bauteile während des Verfestigens eines Klebstoffs im Bereich einer Klebefläche ausgebildet ist. Mithilfe des erfindungsgemäßen Verbinders oder mehrerer erfindungsgemäßer Verbinder kann dadurch beispielsweise ein Möbelstück aus mehreren Bauteilen zusammengesteckt werden, noch bevor ein Klebstoff im Bereich von Klebeflächen verfestigt ist. Die Herstellung eines Gegenstands, beispielsweise eines Möbelstücks, aus mehreren Bauteilen, die miteinander verklebt werden sollen, kann dadurch erheblich beschleunigt werden. Im Serienbau stellt dies einen erheblichen Zeitvorteil dar. Auch im Einzelbau bzw. im Bereich der Maßanfertigung von Möbeln können die einzelnen Bauteile eines Gegenstands auf der Baustelle schnell und präzise zusammengesetzt werden, ohne dass bei jeder Klebefläche zunächst die Verfestigung des Klebstoffs abgewartet werden muss. Der erfindungsgemäße Verbinder ist als einteiliges Bauteil, insbesondere als Kunststoffbauteil, ausgebildet und beispielsweise mittels Kunststoffspritzguss oder auch als Pressteil hergestellt. Als Kunststoffbauteil wird auch ein Bauteil aus Holzwerkstoff angesehen, beispielsweise eine Mischung aus Holz mit Binder, oder auch ein Materialmix mit Kunststoff. Im Rahmen der Erfindung kann der Verbinder aber auch als einteiliges Holzbauteil, beispielsweise aus Sperrholz oder Furnierschichtholz, oder als Metallbauteil ausgebildet sein. Der erfindungsgemäße Verbinder weist zwei erste Klemmflächen und zwei zweite Klemmflächen auf, im Rahmen der Erfindung können auch mehr als zwei erste Klemmflächen und mehr als zwei zweite Klemmflächen vorgesehen sein. Voraussetzung für den Einsatz des Verbinders ist, dass zuvor in den beiden Bauteilen eine Ausnehmung mit wenigstens einem Hinterschnitt hergestellt wird, so dass die ersten und die zweiten Klemmflächen an dem jeweiligen Hinterschnitt in dem ersten bzw. zweiten Bauteil angreifen können.

In Weiterbildung der Erfindung sind die Klemmflächen wenigstens teilweise als Klemmschrägen ausgebildet.

Mittels Klemmschrägen wird ein Kraftschluss zwischen den Klemmschrägen und dem Hinterschnitt am Bauteil erreicht. Die mit dem Verbinder hergestellte Verbindung zwischen den zwei Bauteilen ist dadurch prinzipiell lösbar. Die erfindungsgemäßen Verbinder können beispielsweise dazu verwendet werden, im Einzelbau oder bei der Maßanfertigung von Gegenständen die einzelnen Bauteile probeweise miteinander verbinden zu können, bevor die Bauteile dann miteinander verklebt werden.

In Weiterbildung der Erfindung sind die Klemmflächen an Rastnasen ausgebildet.

Mittels Klemmflächen an Rastnasen kann eine besonders sichere und unlösbare Verbindung zwischen zwei Bauteilen hergestellt werden. Nach dem Einrasten der Rastnasen greifen die Klemmflächen an den Hinterschnitten im ersten bzw. zweiten Bauteil an und bewirken dadurch eine formschlüssige Verbindung, die ohne Zerstörung des Bauteils und/oder des Verbinders nicht mehr lösbar ist.

In Weiterbildung der Erfindung geht wenigstens einer der federnden Arme von einem Endbereich eines anderen federnden Arms aus.

Auf diese Weise kann eine sehr kompakte Ausbildung des Verbinders erfolgen. Dass bei einer solchen Ausbildung die Auslenkung des federnden Arms, der von einem Endbereich eines anderen federnden Arms ausgeht, von der Auslenkung des ersten federnden Arms abhängt, ist unproblematisch, da beim Verbauen des Verbinders in der Regel der Verbinder immer zuerst in ein erstes Bauteil gesteckt und verklemmt bzw. verrastet wird und erst dann der über das erste Bauteil hinausragende Abschnitt des Verbinders in ein zweites Bauteil eingeführt wird.

In Weiterbildung der Erfindung hat der Verbinder eine W-artige Form.

Auf diese Weise wird eine vergleichsweise einfach herstellbare und funktionssichere Form des Verbinders erreicht.

In Weiterbildung der Erfindung geht jeder der federnden Arme von einem Verbindungsstück aus.

Auf diese Weise kann der Federweg jedes der federnden Arme weitgehend unabhängig von dem Federweg eines anderen Arms definiert werden.

In Weiterbildung der Erfindung ist das Verbindungsstück als Verbindungsstrebe ausgebildet, wobei die Verbindungsstrebe senkrecht zu den federnden Armen angeordnet ist.

In Weiterbildung der Erfindung ist mittig zwischen den zwei ersten federnden Armen und/oder mittig zwischen den zwei zweiten federnden Armen jeweils ein Anschlag angeordnet.

Durch einen Anschlag kann verhindert werden, dass der Verbinder zu tief in die Ausnehmung des jeweiligen Bauteils eingeschoben wird, so dass die federnden Arme geschützt werden. Weiter kann verhindert werden, dass die Rastnasen zu weit ausgelenkt werden, beispielsweise während des Transports oder dann, wenn der Verbinder in der Ausnehmung verkantet oder verschoben wird, was die Gefahr des Abbrechens der federnden Arme mit sich bringt. Der Anschlag kann somit als Begrenzungsanschlag für die federnden Arme und/oder als Tiefenanschlag beim Einschieben des Verbinders ausgebildet sein.

In Weiterbildung der Erfindung liegen zwei der federnden Arme einander gegenüber, wobei Klemmflächen der federnden Arme voneinander weg gerichtet sind, und wobei die Rückseiten der federnden Arme, die gegenüber den Klemmflächen liegen, mittels einer Federstrebe miteinander verbunden sind, wobei die Federstrebe in einer ersten Stellung eine Bewegung der federnden Arme aufeinander zu ermöglicht und in einer zweiten Stellung eine Bewegung der federnden Arme aufeinander zu blockiert.

Die Federstrebe kann beispielsweise eine Totpunktkonstruktion aufweisen, so dass die Federstrebe beim Einschieben des Anschlags in die Ausnehmung einen Totpunkt überschreitet und nach Überschreiten des Totpunkts eine Bewegung der federnden Arme aufeinander zu blockiert. Alternativ oder zusätzlich können auch zusätzliche Rastmittel vorgesehen sein, um die Federstrebe in der zweiten Stellung zu halten, in der die Federstrebe eine Bewegung der federnden Arme aufeinander zu blockiert. Auf diese Weise kann mittels des Verbinders eine unlösbare Verbindung zwischen zwei Bauteilen hergestellt werden.

In Weiterbildung der Erfindung ist die Federstrebe mit einem Tiefenanschlag verbunden, der beim Einschieben des Verbinders an einer Begrenzung der Ausnehmung anschlägt und der im weiteren Verlauf des Einschiebens die Federstrebe in die zweite Stellung bewegt.

Auf diese Weise kann sichergestellt werden, dass die Rastmittel erst dann einrasten und eine Bewegung der federnden Arme mittels der Federstrebe blockieren, wenn der Verbinder in seiner korrekten Position in der Ausnehmung angelangt ist.

Die der Erfindung zugrunde liegende Aufgabe wird auch durch eine Anordnung mit zwei Bauteilen und einem erfindungsgemäßen Verbinder gelöst, wobei jedes der Bauteile eine Ausnehmung mit wenigstens zwei einander gegenüberliegenden Hinterschnitten aufweist und wobei zwei Klemmflächen der Verbinder in die Hinterschnitte im ersten Bauteil und zwei Klemmflächen der Verbinder in die Hinterschnitte im zweiten Bauteil eingreifen.

In Weiterbildung der Erfindung weist die Ausnehmung eine T-artige Querschnittsform auf, wobei im Querschnitt ein erster Abschnitt, der von der Öffnung der Ausnehmung ausgeht, eine erste Breite hat und ein zweiter Abschnitt, der an den ersten Abschnitt anschließt, eine zweite Breite hat, wobei die zweite Breite größer ist als die erste Breite.

Auf diese Weise wird am Übergang von dem ersten Abschnitt in den zweiten Abschnitt ein Hinterschnitt bereitgestellt. Eine solche Ausnehmung kann beispielweise mit einem rotierenden Fräser hergestellt werden, der an einem Scheibenabschnitt und auch am Schaft Fräszähne aufweist, wobei der Scheibenabschnitt einen größeren Querschnitt als der Schaft des Fräsers hat. Der Fräser wird in das Bauteil eingetaucht und dann in einer vordefinierten Tiefe seitlich und parallel zur Verbindungsfläche bewegt. Dadurch entsteht zu beiden Seiten der Mittelbohrung oder Mittelöffnung ein Hinterschnitt parallel zur Verbindungsfläche. Der Fräser wird dann wieder durch die Mittelöffnung herausgezogen. Auch die senkrecht zur Breite gemessene Tiefe des ersten Abschnitts kann kleiner sein als die Tiefe des zweiten Abschnitts, so dass dadurch weitere Hinterschnitte zwischen dem ersten Abschnitt und dem zweiten Abschnitt gebildet sind.

In Weiterbildung der Erfindung ist auf die Verbindungsflächen der Bauteile Klebstoff aufgetragen.

Die Bauteile können dadurch im Bereich der Klebeflächen miteinander verbunden werden und werden im Bereich der Klebeflächen durch den oder die erfindungsgemäßen Verbinder zusammengehalten, bis der Klebstoff verfestigt ist, beispielsweise ausgehärtet ist. Der Verbinder verbleibt in der Ausnehmung, was insofern problemlos ist, da weder der Verbinder noch die Ausnehmung von der Außenseite der Bauteile her sichtbar ist.

In Weiterbildung der Erfindung sind die Klemmflächen an Rastnasen ausgebildet, wobei die Rastnasen in die Hinterschnitte eingreifen, oder die Klemmflächen sind als Klemmschrägen ausgebildet, wobei die Klemmschrägen an den Hinterschnitten angreifen.

Mittels Klemmflächen an Rastnasen kann eine unlösbare Verbindung durch einen Formschluss zwischen den Rastnasen und dem Hinterschnitt erreicht werden. Mittels Klemmschrägen, die an Hinterschnitten angreifen, kann ein Kraftschluss und dadurch eine lösbare Verbindung zwischen dem Verbinder und den Hinterschnitten realisiert werden.

Die der Erfindung zugrunde liegende Aufgabe wird auch durch ein Verfahren zum Verbinden eines ersten Bauteils und eines zweiten Bauteils mit einem erfindungsgemäßen Verbinder gelöst, wobei jedes der Bauteile eine Ausnehmung mit jeweils wenigstens zwei Hinterschnitten aufweist, wobei das Einschieben des Verbinders in die Ausnehmung des ersten Bauteils vorgesehen ist, bis die Klemmflächen des Verbinders an den Hinterschnitten des ersten Bauteils angreifen, wobei das Einschieben des aus der Ausnehmung im ersten Bauteil herausragenden Abschnitts des Verbinders in die Ausnehmung des zweiten Bauteils vorgesehen ist, bis die Klemmflächen der Verbinder an den Hinterschnitten des zweiten Bauteils angreifen.

Auf diese Weise kann entweder eine lösbare oder eine unlösbare Verbindung zwischen den beiden Bauteilen durch einfaches Einschieben des Verbinders hergestellt werden. Auf Klebeflächen des ersten Bauteils und/oder des zweiten Bauteils kann vor dem Verbinden der Bauteile mittels des Verbinders Klebstoff aufgebracht werden, so dass der Verbinder dann als Verleimhilfe dient, bis der Klebstoff auf den Klebeflächen verfestigt ist.

Die der Erfindung zugrunde liegende Aufgabe wird auch durch die Verwendung eines erfindungsgemäßen Verbinders als Verleimhilfe beim Verkleben zweier Bauteile gelöst.

Weitere Merkmale und Vorteile der Erfindung ergeben sich aus den Ansprüchen und der folgenden Beschreibung im Zusammenhang mit den Zeichnungen. Einzelmerkmale der unterschiedlichen, in der Beschreibung beschriebenen und den Zeichnungen gezeigten Ausführungsformen der Erfindung lassen sich dabei in beliebiger Weise kombinieren, ohne den Rahmen der Erfindung zu überschreiten. Dies gilt auch für die Kombination von Einzelmerkmalen ohne weitere Einzelmerkmale, mit denen sie im Zusammenhang dargestellt und/oder beschrieben sind.

In den Zeichnungen zeigen:
- Fig. 1: eine schematische isometrische Ansicht zweier Bauteile,
- Fig. 2: eine schematische Schnittansicht der Bauteile der Fig. 1,
- Fig. 3: eine Seitenansicht der Bauteile der Fig. 1,
- Fig. 4: eine Seitenansicht eines erfindungsgemäßen Verbinders gemäß einer ersten Ausführungsform,
- Fig. 5: den Verbinder der Fig. 4 in einem Zustand, in dem er in eine Ausnehmung in einem ersten Bauteil eingeschoben ist,
- Fig. 6: den Verbinder der Fig. 5 beim Einschieben in eine Ausnehmung in einem zweiten Bauteil,
- Fig. 7: den Verbinder der Fig. 6 im vollständig eingeschobenen Zustand,
- Fig. 8: eine Seitenansicht eines erfindungsgemäßen Verbinders gemäß einer weiteren Ausführungsform,
- Fig. 9: eine Seitenansicht zweier Bauteile, die mit dem Verbinder der Fig. 8 verbunden sind,
- Fig. 10: den Verbinder der Fig. 8 beim Einschieben in die Ausnehmung eines ersten Bauteils,
- Fig. 11: den Verbinder der Fig. 10 beim Einschieben in eine Ausnehmung eines zweiten Bauteils,
- Fig. 12: den Verbinder der Fig. 11 im vollständig eingeschobenen Zustand,
- Fig. 13: einen erfindungsgemäßen Verbinder gemäß einer dritten Ausführungsform der Erfindung,
- Fig. 14: einen Verbinder gemäß einer vierten Ausführungsform der Erfindung,
- Fig. 15: einen Verbinder gemäß einer fünften Ausführungsform der Erfindung,
- Fig. 16: einen Verbinder gemäß einer sechsten Ausführungsform der Erfindung,
- Fig. 17: einen Verbinder gemäß einer siebten Ausführungsform der Erfindung,
- Fig. 18: einen Verbinder gemäß einer achten Ausführungsform der Erfindung,
- Fig. 19: einen Verbinder gemäß einer neunten Ausführungsform der Erfindung und
- Fig. 20: einen Verbinder gemäß einer zehnten Ausführungsform der Erfindung.

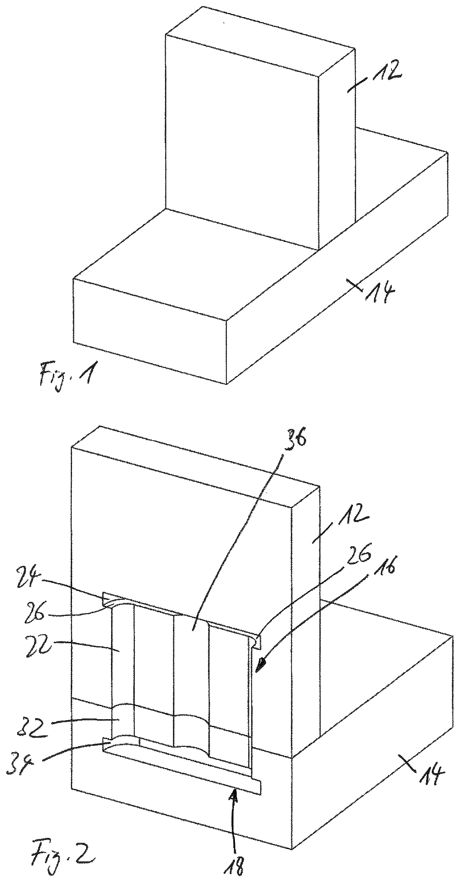

Fig. 1 zeigt ein erstes Bauteil 12 und ein zweites Bauteil 14 in einer schematischen, isometrischen Ansicht. Die beiden Bauteile 12, 14 liegen im Bereich einer in Fig. 1 verdeckten Klebefläche aneinander an. Die Bauteile 12, 14 sollen miteinander verklebt werden. Um während des Verfestigens des Klebstoffs die beiden Bauteile 12, 14 nicht relativ zueinander durch externe Vorrichtungen fixieren zu müssen, wird ein erfindungsgemäßer Verbinder eingesetzt. Hierzu müssen die beiden Bauteile 12, 14 mit jeweils einer Ausnehmung mit wenigstens einem Hinterschnitt versehen werden und der Verbinder muss in die beiden Ausnehmungen eingesetzt werden, was nachfolgend noch erläutert wird. Sowohl die Ausnehmungen in den Bauteilen 12, 14 als auch der Verbinder sind, wie Fig. 1 erkennen lässt, im verbundenen Zustand der beiden Bauteile 12, 14 von einer Außenseite der Bauteile her nicht sichtbar.

Das erste Bauteil 12 liegt mit einer Schmalfläche auf einer Breitfläche des zweiten Bauteils 14 auf. Die beiden Bauteile 12, 14 sind bei der dargestellten Ausführungsform senkrecht aufeinandergesetzt. Im Rahmen der Erfindung kann der Verbinder selbstverständlich auch dazu eingesetzt werden, zwei Bauteile in einem von 90° abweichenden Winkel miteinander zu verbinden oder um zwei Bauteile mit ihren Schmalflächen zu verbinden, beispielsweise im Rahmen eines Plattenstoßes zur Plattenverlängerung. Auch die Verbindung zweier Bauteile mit ihren Breitflächen ist im Rahmen der Erfindung möglich..

Fig. 2 zeigt eine Schnittansicht der beiden Bauteile 12, 14, wobei eine Schnittebene senkrecht und mittig zur Klebefläche liegt, also senkrecht zur Schmalfläche des ersten Bauteils 12 und senkrecht zur Breitfläche des zweiten Bauteils 14. In Fig. 2 ist im ersten Bauteil 12 eine erste Ausnehmung 16 zu erkennen und im zweiten Bauteil 14 eine zweite Ausnehmung 18. Die erste Ausnehmung 16 weist einen ersten Abschnitt 22 und einen zweiten Abschnitt 24 auf. Der erste Abschnitt 22 weist eine gegenüber dem zweiten Abschnitt 24 kleinere Breite auf. Zwischen dem ersten Abschnitt 22 und dem zweiten Abschnitt 24 sind dadurch zwei Hinterschnitte 26 gebildet, die sich seitlich an das Ende des ersten Abschnitts 22 anschließen. Weitere Hinterschnitte sind in Tiefenrichtung ausgebildet, die sich dadurch ergeben, dass der erste Abschnitt 22 eine kleinere Tiefe hat als der zweite Abschnitt 24.

Die zweite Ausnehmung 18 im zweiten Bauteil 14 ist in gleicher Weise ausgebildet, lediglich ein erster Abschnitt 32 der zweiten Ausnehmung 18 ist kürzer als der erste Abschnitt 22 der ersten Ausnehmung 16. Auch bei der zweiten Ausnehmung 18 sind zwischen dem ersten Abschnitt 32 und dem zweiten Abschnitt 34 zwei Hinterschnitte gebildet, die sich seitlich an das Ende ders ersten Abschnitts 32 anschließen. Weitere Hinterschnitte sind in Tiefenrichtung ausgebildet, die sich dadurch ergeben, dass der erste Abschnitt 32 eine kleinere Tiefe hat als der zweite Abschnitt 34.

Die Ausnehmungen 16, 18 können jeweils mittels eines Fräsers hergestellt werden, der einen scheibenförmigen Fräsabschnitt und auch Fräszähne an einem Schaft aufweist, wobei der Schaft gegenüber dem scheibenförmigen Abschnitt einen kleineren Durchmesser hat. Ein solcher Fräser wird senkrecht zum ersten Bauteil 12 in die schmale, in Fig. 2 unten liegende Fläche des Bauteils 12 eingeführt, also in die Schmalfläche, so dass durch diese Eintauchbewegung eine zylindrische Mittelbohrung 36 entsteht, von der in Fig. 2 noch ein Wandabschnitt erkennbar ist. Sobald der Scheibenabschnitt des Fräsers in der vorgesehenen Tiefe angekommen ist, also in der Tiefe des zweiten Abschnitts 24, wird der Fräser zunächst nach links und dann nach rechts bewegt oder umgekehrt, so dass dadurch die seitlich der Mittelbohrung 36 liegenden Bereiche der Abschnitte 22, 24 gebildet werden. Herausgezogen wird der Scheibenabschnitt des Fräsers wieder durch den Bereich der Mittelbohrung 36. Links und rechts der Mittelbohrung 36, von der nach Fertigstellung der Ausnehmung 16 selbstverständlich nur noch Teilbereiche der Wandung vorhanden sind, ist dadurch eine Schulter 26 gebildet, die abschnittsweise links der Mittelbohrung 36 und abschnittsweise rechts der Mittelbohrung 36 liegt und die die Hinterschnitte der Ausnehmung 16 definiert.

Die zweite Ausnehmung 18 im zweiten Bauteil 14 wird in der Breitfläche des zweiten Bauteils 14 wie die erste Ausnehmung 16 hergestellt, lediglich der erste Abschnitt 32 wird weniger tief ausgeführt, als der erste Abschnitt 22 der ersten Ausnehmung 16 im ersten Bauteil 12.

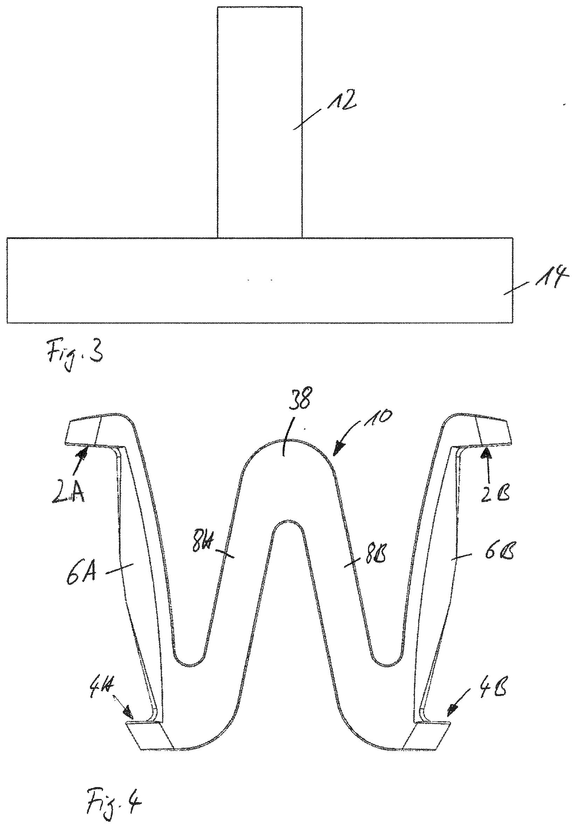

Fig. 3 zeigt eine Seitenansicht der beiden Bauteile 12, 14. Die beiden Bauteile werden so miteinander verbunden, dass das erste Bauteil 12 mit seiner Schmalfläche senkrecht auf die Breitfläche des zweiten Bauteils 14 aufgesetzt wird.

Fig. 4 zeigt einen Verbinder 10 gemäß einer ersten Ausführungsform der Erfindung. Die Abmessungen und die Ausbildung des Verbinders 10 sind auf die Abmessungen und die Ausbildung der Ausnehmungen 16, 18 in den Bauteilen 12, 14 abgestimmt.

Der Verbinder 10 weist in der Seitenansicht der Fig. 4 eine W-artige Form auf. Der Verbinder 10 weist zwei erste Klemmflächen 2A, 2B auf und zwei zweite Klemmflächen 4A, 4B. Die ersten Klemmflächen 2A, 2B sind dafür vorgesehen, an den seitlichen Hinterschnitten 26 der Ausnehmung 16 im ersten Bauteil 12 anzugreifen und die Klemmflächen 4A, 4B sind dafür vorgesehen, an den seitlichen Hinterschnitten der Ausnehmung 18 im zweiten Bauteil 14 anzugreifen. Die Klemmflächen 2A, 2B und die Klemmflächen 4A, 4B sind jeweils mittels einer Rastnase ausgebildet. Die Klemmfläche 2A ist der Klemmfläche 4A zugewandt und die Klemmfläche 2B ist der Klemmfläche 4B zugewandt. Die Rastnase, mittels der die Klemmfläche 2A ausgebildet wird, ist am freien Ende eines federnden Arms 6A ausgebildet und die Klemmfläche 2B ist am freien Ende eines federnden Arms 6B ausgebildet. Die federnden Arme 6A, 6B gehen wiederum vom Ende eines federnden Arms 8A bzw. 8B aus. Die Klemmfläche 4A ist mittels einer Rastnase am Ende des federnden Arms 8A ausgebildet und der federnde Arm 6A beginnt im Bereich der Rastnase am Ende des federnden Arms 8A. Die Klemmfläche 4B ist mittels einer Rastnase am Ende des federnden Arms 8B ausgebildet und der federnde Arm 6B beginnt im Bereich der Rastnase am Ende des federnden Arms 8B. Die federnden Arme 8A und 8B sind im Bereich einer Basis 38 miteinander verbunden. Der Verbinder 10 ist als einstückiges Kunststoffteil ausgebildet und beispielsweise mittels Kunststoffspritzguss oder als Pressteil hergestellt. Der Verbinder 10 kann aber auch aus Holz, beispielsweise Sperrholz oder Furnierschichtholz, oder einem Holzwerkstoff oder Metall ausgebildet sein und beispielsweise ausgelasert, ausgestanzt oder ausgesägt sein. Der Verbinder 10 kann auch aus einer Mischung aus einem Holzwerkstoff und einem Kunststoff gebildet sein, beispielsweise Holzmehl mit Kunststoffbinder oder auch Holzspäne, insbesondere Holzwerkstoffabfälle, mit einem Binder.

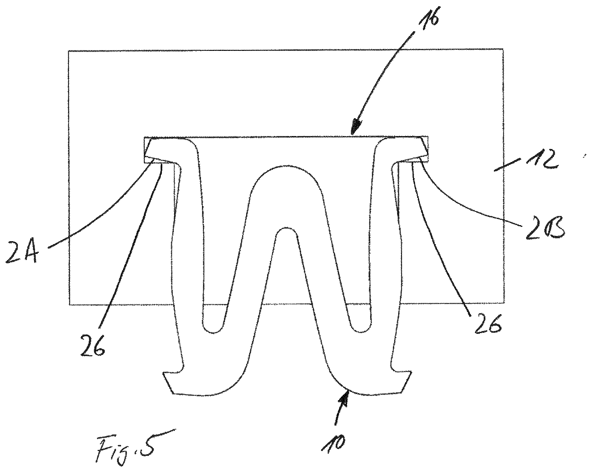

Fig. 5 zeigt den Verbinder 10 der Fig. 4 in einem Zustand, in dem der Verbinder bereits in die Ausnehmung 16 im Bauteil 12 eingeschoben wurde. Um den Verbinder 10 in die Ausnehmung 16 einschieben zu können, werden die federnden Arme 6A, 6B in einer Richtung aufeinander zu zusammengedrückt, bis die Rastnasen, an denen die ersten Klemmflächen 2A, 2B ausgebildet sind, in den schmäleren Abschnitt 22 der Ausnehmung 16 eingeführt werden können. Der Verbinder 10 wird dann in die Ausnehmung 16 eingeschoben, bis die Rastnasen in den Bereich des zweiten Abschnitts 24 der Ausnehmung 16 gelangen und infolgedessen die Rastnasen unter Wirkung der federnden Arme 6A, 6B, 8A, 8B nach außen schnappen und an dem Hinterschnitt 26 der Ausnehmung 16 angreifen.

Wie Fig. 5 zu entnehmen ist, ist der Verbinder 10 nun in der Ausnehmung 16 verrastet. Der Verbinder 10 kann in Fig. 5 in einer Richtung nach unten nicht mehr aus der Ausnehmung 16 im Bauteil 12 herausgezogen werden.

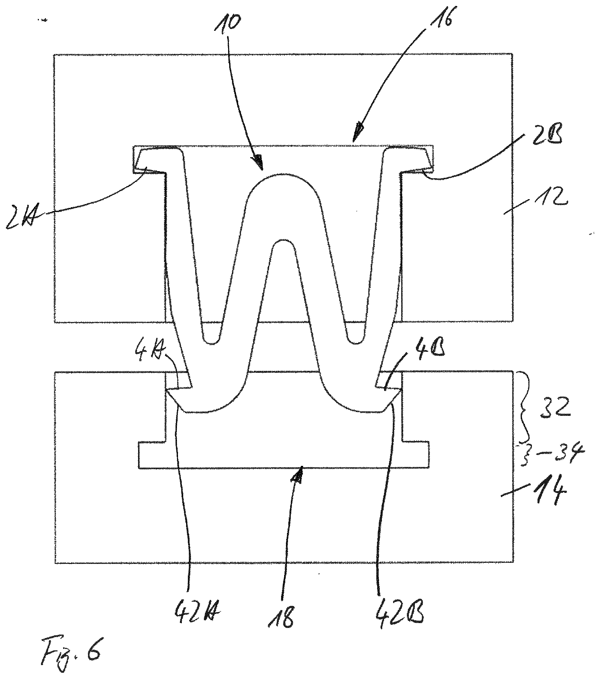

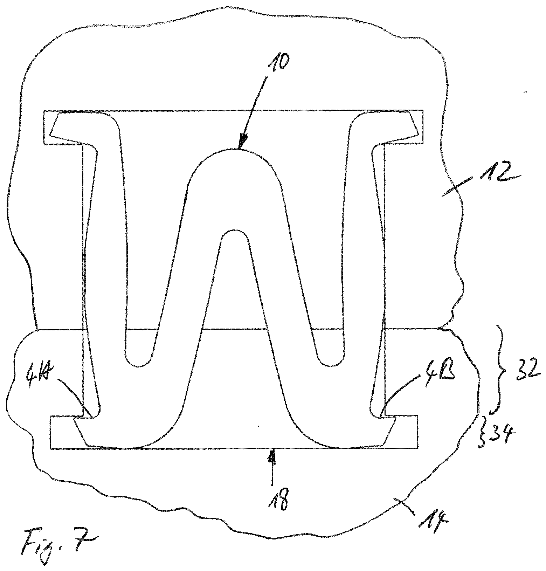

Fig. 6 zeigt den Verbinder 10, der unverändert in der Ausnehmung 16 im ersten Bauteil 12 aufgenommen ist, beim Einschieben in die Ausnehmung 18 im zweiten Bauteil 14. Um den Verbinder 10 mit seinem, aus der Ausnehmung 16 im Bauteil 12 herausragenden Abschnitt in die Ausnehmung 18 einschieben zu können, werden die Rastnasen des Verbinders, die aus der Ausnehmung 16 herausragen und an denen die zweiten Klemmflächen 4A, 4B angeordnet sind, nötigenfalls aufeinander zu gedrückt, wobei dadurch die federnden Arme 8A, 8B aufeinander zu gedrückt werden. Das Einführen der Rastnasen in die Ausnehmung 18 ist auch dadurch erleichtert, dass eine in Fig. 6 links bzw. rechts liegende Begrenzung der Rastnasen als Anlaufschräge 42A, 42B ausgebildet ist. Beim Einschieben der Rastnasen laufen die Anlaufschrägen 42A, 42B somit auf die Begrenzung der Öffnung der Ausnehmung 18 auf und durch eine einfache Einschiebebewegung werden dadurch die Rastnasen aufeinander zu gedrückt und können in den ersten Abschnitt 32 der Ausnehmung 18 eingeschoben werden. Der Verbinder 10 wird nun dadurch weiter in die Ausnehmung 18 eingeschoben, dass das erste Bauteil 12 in Richtung auf das zweite Bauteil 14 bewegt wird, bis der Zustand der Fig. 7 erreicht ist.

Im Zustand der Fig. 7 sind die Rastnasen mit den Klemmflächen 4A, 4B in den zweiten Abschnitt 34 der Ausnehmung 18 eingerastet und die Klemmflächen 4A, 4B greifen abschnittsweise an dem Hinterschnitt der Ausnehmung 18 an. Der Hinterschnitt ist durch eine Schulter zwischen den beiden Abschnitten 32, 34 der Ausnehmung 18 gebildet, vgl. Fig. 2.

Im Zustand der Fig. 7 sind dadurch das erste Bauteil 12 und das zweite Bauteil 14 aneinander gesichert. Im Bereich einer Kontaktfläche zwischen den beiden Bauteilen 12, 14 kann vor dem Zusammenschieben der beiden Bauteile 12, 14 ein Klebstoff aufgetragen werden. Der Verbinder 10 hält die beiden Bauteile 12, 14 nun in der endgültigen Positionierung aneinander, bis der Klebstoff im Bereich der Kontaktflächen oder Klebeflächen verfestigt ist. Der Verbinder 10 kann dadurch als Verleimhilfe beim Verkleben bzw. Verleimen der beiden Bauteile 12, 14 verwendet werden.

Besonders vorteilhaft ist dabei, dass beim Zusammenfügen eines Gegenstands aus mehreren Bauteilen, beispielsweise aus den Bauteilen 12, 14, nicht die Verfestigung des Klebstoffs abgewartet werden muss, sondern die Bauteile 12, 14 in einfacher Weise zusammengesteckt werden können, wobei der Verbinder 10 die beiden Bauteile 12, 14 in der endgültigen Position zueinander hält. Beim Zusammenbau eines Gegenstands aus mehreren Bauteilen muss dadurch nicht die Verfestigung des Klebstoffs im Bereich der einzelnen Klebestellen abgewartet werden. Gerade beim Serienbau von Gegenständen, beispielsweise Möbeln, können dadurch erhebliche Zeitersparnisse realisiert werden.

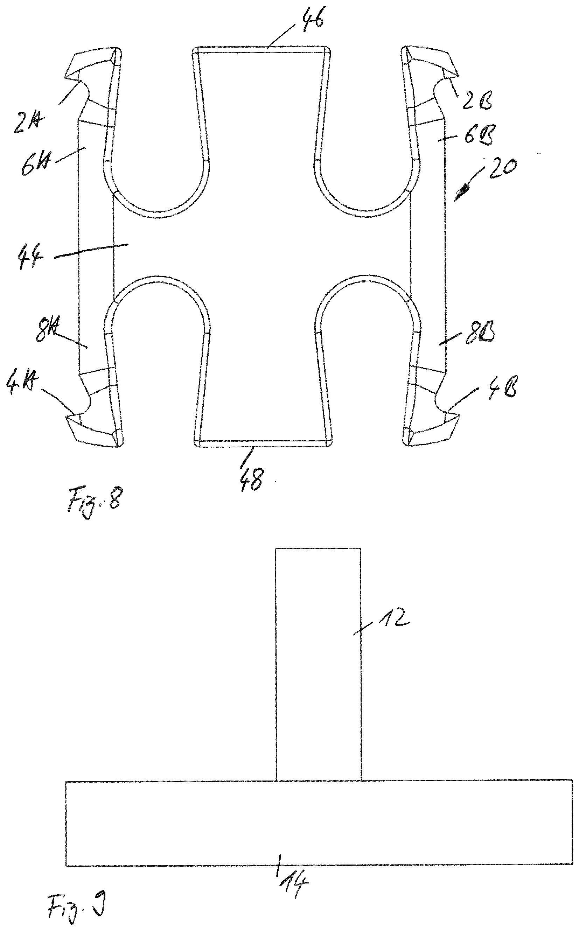

Fig. 8 zeigt einen Verbinder 20 gemäß einer zweiten Ausführungsform der Erfindung in einer Seitenansicht. Der Verbinder 20 weist zwei erste Klemmflächen 2A, 2B auf, die mittels Rastnasen an federnden Armen 6A, 6B realisiert sind. Der Verbinder 20 weist weiter zwei zweite Klemmflächen 4A, 4B auf, die mittels Rastnasen an den freien Enden von federnden Armen 8A, 8B realisiert sind.

Die federnden Arme 6A, 8A gehen von einer Verbindungsstrebe 44 aus, wobei die federnden Arme 6A, 8A von einem in Fig. 8 linken Ende der Verbindungsstrebe 44 ausgehen und die federnden Arme 6B, 8B von einem in Fig. 8 rechten Ende der Verbindungsstrebe 44. Von einem Mittelabschnitt der Verbindungsstrebe 44 gehen Vorsprünge aus, deren freie Enden einen ersten Anschlag 46 bzw. einen zweiten Anschlag 48 ausbilden. Der in Fig. 8 obere Anschlag 46 liegt auf Höhe der oberen Enden der Rastnasen, an denen die Klemmflächen 2A, 2B realisiert sind. Der in Fig. 8 untere Anschlag 48 liegt auf Höhe der unteren Begrenzung der Rastnasen, an denen die Klemmflächen 4A, 4B realisiert sind. Die Anschläge 46, 48 bilden einerseits einen Tiefenanschlag beim Einschieben des Verbinders 20 in die Ausnehmungen 16, 18 in den Bauteilen 12, 14. Darüber hinaus bilden die Anschläge 46, 48 mit ihren in Fig. 8 rechts bzw. links dargestellten Seitenkanten einen Anschlag, um eine übermäßige Bewegung der federnden Arme 6A, 6B nach innen, auf den Anschlag 46 zu, zu verhindern. Der Anschlag 48 bildet mit seinen rechts bzw. links dargestellten Seitenkanten einen Anschlag, um eine übermäßige Bewegung der federnden Arme 8A, 8B nach innen zu verhindern. Dadurch kann vermieden werden, dass die federnden Arme 6A, 6B, 8A, 8B beim Einschieben des Verbinders 20 in die Ausnehmungen 16, 18 versehentlich abgebrochen werden, beispielsweise durch Verkanten oder Verdrehen des Verbinders 20, bevor dieser vollständig eingeschoben ist.

Fig. 9 zeigt noch einmal eine Seitenansicht der beiden Bauteile 12, 14, wobei die Bauteile 12, 14, siehe Fig. 2, mit den Ausnehmungen 16, 18 versehen sind und mittels des Verbinders 20 der Fig. 8 miteinander verbunden werden sollen.

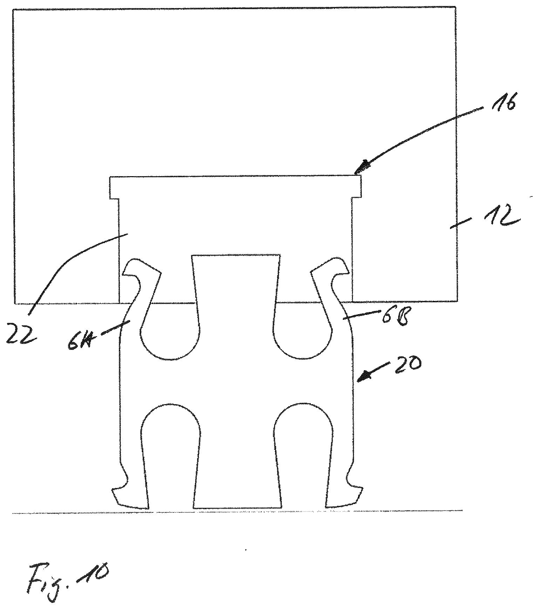

Fig. 10 zeigt den Verbinder 20 beim Einschieben in die Ausnehmung 16 in dem ersten Bauteil 12. Die federnden Arme 6A, 6B werden nach innen gedrückt, so dass die Rastnasen am freien Ende der federnden Arme 6A, 6B in den ersten Abschnitt 22 der Ausnehmung 16 eingeschoben werden können.

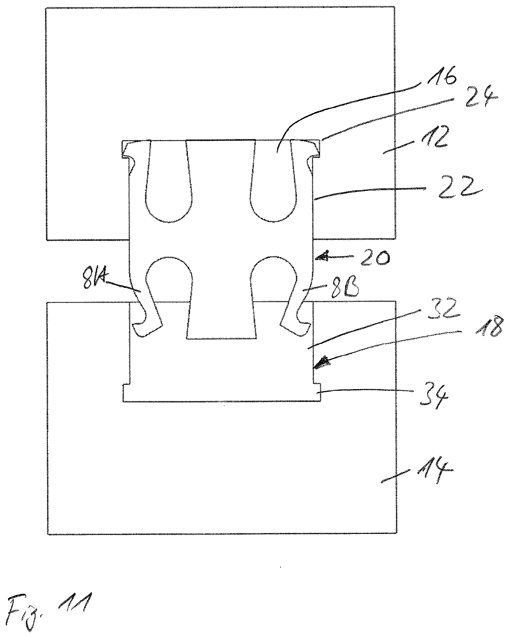

Fig. 11 zeigt den Verbinder 20 in einem Zustand, in dem der Verbinder 20 vollständig in die Ausnehmung 16 im ersten Bauteil 12 eingeschoben wurde. Die Rastnasen sind nun in den zweiten Abschnitt 24 der Ausnehmung 16 eingeschnappt und die Klemmflächen 2A, 2B liegen jeweils an dem Hinterschnitt zwischen dem ersten Abschnitt 22 und dem zweiten Abschnitt 24 der Ausnehmung 16 an.

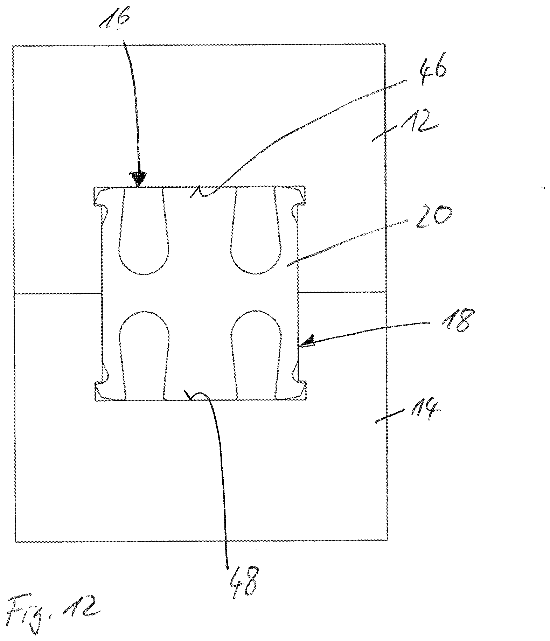

Die federnden Arme 8A, 8B wurden nach innen gebogen, um die Rastnasen an den freien Enden der federnden Arme 8A, 8B in die Ausnehmung 18 im zweiten Bauteil 14 einführen zu können. Der Verbinder 20 wird durch Aufeinanderzubewegen der beiden Bauteile 12, 14 so weit in die Ausnehmung 18 im zweiten Bauteil 14 eingeschoben, bis die Rastnasen in den zweiten Abschnitt 34 der Ausnehmung 18 einschnappen und dann die Klemmflächen 4A, 4B an dem Hinterschnitt zwischen dem ersten Abschnitt 32 und dem zweiten Abschnitt 34 der Ausnehmung 18 anliegen, vgl. Fig. 12.

Es ist Fig. 11 und Fig. 12 zu entnehmen, dass der in Fig. 11 und Fig. 12 oben dargestellte Anschlag 46 verhindert, dass der Verbinder 20 zu weit in die Ausnehmung 16 im ersten Bauteil 12 eingeschoben wird. Denn der Anschlag 46 liegt, wie bereits erläutert wurde, auf gleicher Höhe mit der jeweils oberen Begrenzung der Rastnasen mit den Klemmflächen 2A, 2B. Der Anschlag 46 kann dadurch eine Beschädigung der Rastnasen bzw. der federnden Arme 6A, 6B verhindern, wenn beispielsweise der Verbinder 20 mit roher Gewalt, beispielsweise mittels eines Hammers, in die Ausnehmung 16 eingeführt wird. Der Anschlag 48 an dem in Fig. 11 und Fig. 12 unteren Ende des Verbinders 20 verhindert in gleicher Weise eine Beschädigung der Rastnasen an den freien Enden der federnden Arme 8A, 8B beim Einschieben des Verbinders 20 in die Ausnehmung 18 im zweiten Bauteil 14.

Im Zustand der Fig. 12 sind die beiden Bauteile 12, 14 mittels des Verbinders 20 unlösbar miteinander verbunden. Der Verbinder 20 kann als Verleimhilfe dienen und hält die beiden Bauteile 12, 14 in der vorgesehenen Position, bis ein Klebstoff an einer Klebefläche zwischen den Bauteilen 12, 14 verfestigt ist.

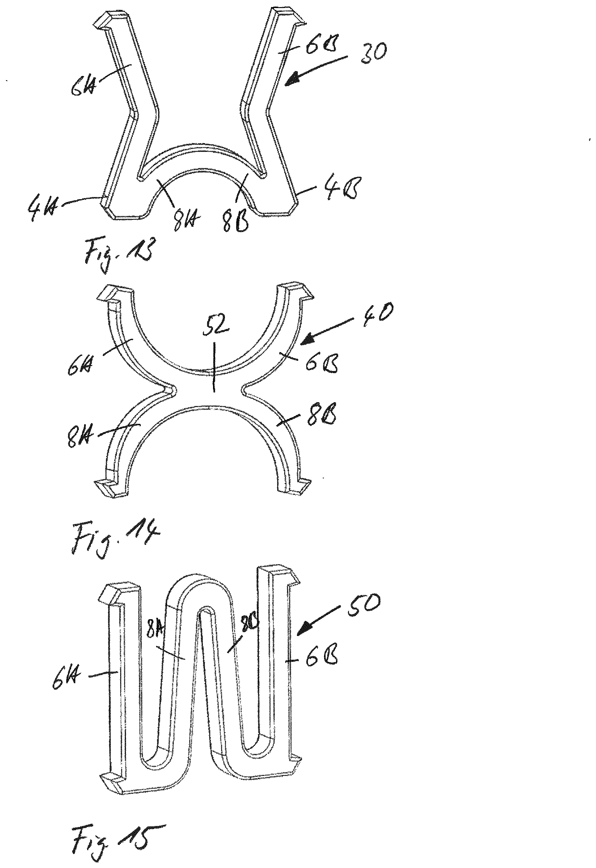

Fig. 13 zeigt einen Verbinder 30 gemäß einer dritten Ausführungsform der Erfindung. Der Verbinder 30 weist zwei erste federnde Arme 6A, 6B auf, an deren freiem Ende Rastnasen mit Klemmflächen ausgebildet sind. Die federnden Arme 6A, 6B gehen von den freien Enden zweier federnder Arme 8A, 8B aus, wobei die beiden federnden Arme 8A, 8B einen Steg in Form eines Kreisabschnitts bilden. An den Enden der federnden Arme 8A, 8B sind Klemmflächen 4A, 4B realisiert. Diese Klemmflächen 4A, 4B sind dafür vorgesehen, an der Kante zwischen dem ersten Abschnitt 32 und dem zweiten Abschnitt 34 der Ausnehmung 18 anzugreifen oder an der Kante zwischen dem ersten Abschnitt 22 und dem zweiten Abschnitt 24 der Ausnehmung 16 im ersten Bauteil 12. Im Rahmen der Erfindung müssen die Klemmflächen nicht notwendigerweise mittels einer Rastnase realisiert sein. Die Klemmflächen 4A, 4B sind jeweils als Klemmschrägen ausgebildet. Zwischen der Kante am Übergang zwischen einem ersten Abschnitt der Ausnehmungen und einem zweiten Abschnitt der Ausnehmungen wird dadurch ein Kraftschluss gebildet. Die beiden Bauteile können dadurch sicher aneinandergehalten werden und dennoch ist die Verbindung zwischen den Bauteilen noch lösbar, da die Klemmschrägen 4A, 4B durch entsprechenden Krafteinsatz aus ihrer Position in der Ausnehmung 18 oder 16 herausgezogen werden können.

Fig. 14 zeigt einen Verbinder 40 gemäß einer vierten Ausführungsform der Erfindung. Der Verbinder 40 ist symmetrisch aufgebaut und weist zwei erste federnde Arme 6A, 6B auf, die jeweils viertelkreisförmig ausgebildet sind und an deren freiem Ende jeweils eine Rastnase angeordnet ist. Zwei zweite federnde Arme 8A, 8B sind ebenfalls jeweils viertelkreisförmig ausgebildet und an den freien Enden der federnden Arme 8A, 8B ist jeweils eine Rastnase ausgebildet. Die federnden Arme 6A, 6B, 8A, 8B sind im Bereich einer Basis 52 miteinander verbunden.

Um den Verbinder 40 in die Ausnehmungen 16, 18 der Bauteile 12, 14 einzuführen, werden die beiden federnden Arme 6A, 6B bzw. 8A, 8B jeweils aufeinander zu gedrückt. Dies kann auch dadurch geschehen, dass die Anlaufschrägen an den jeweiligen Rastnasen auf die Begrenzungskanten der Ausnehmungen 16, 18 auflaufen und die federnden Arme 6A, 6B bzw. 8A, 8B dadurch aufeinander zu drücken.

Fig. 15 zeigt einen Verbinder 50 gemäß einer fünften Ausführungsform der Erfindung. Der Verbinder 50 ist sehr ähnlich zu dem Verbinder 10 der Fig. 4 ausgebildet und weist eine W-artige Form in einer Seitenansicht auf. Lediglich die federnden Arme 6A, 6B sowie 8A, 8B sind geringfügig anders ausgebildet. Beispielsweise verlaufen die federnden Arme 6A, 6B parallel zueinander.

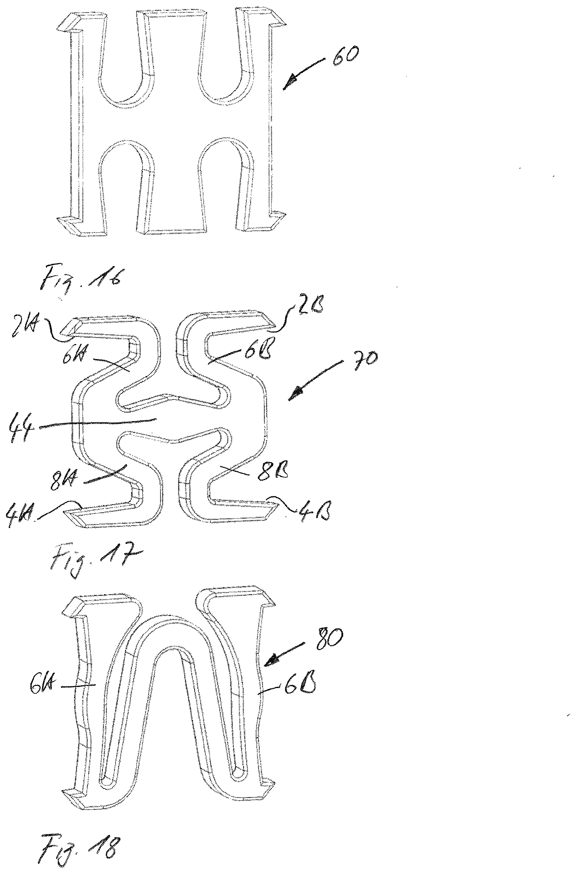

Fig. 16 zeigt einen Verbinder 60 gemäß einer sechsten Ausführungsform der Erfindung. Der Verbinder 60 ist sehr ähnlich zu dem Verbinder 20 der Fig. 8 ausgebildet. Lediglich die Seitenkanten des Verbinders 60 zwischen den Rastnasen am oberen bzw. unteren Ende verlaufen im Unterschied zum Verbinder 20 über ihre vollständige Länge geradlinig.

Fig. 17 zeigt einen Verbinder 70 gemäß einer siebten Ausführungsform der Erfindung. Der Verbinder 70 weist zwei C-förmige erste federnde Arme 6A, 6B auf, an deren freien Enden Klemmflächen 2A, 2B vorgesehen sind. Der Verbinder 70 weist zwei ebenfalls C-förmig ausgebildete zweite federnde Arme 8A, 8B auf, an deren freien Enden die Klemmflächen 4A, 4B vorgesehen sind. Die federnden Arme 6A, 6B, 8A, 8B sind mit einer Verbindungsstrebe 44 verbunden. Die freien Enden der federnden Arme 6A, 6B, 8A, 8B sind jeweils mit Anlaufschrägen versehen. Die freien Enden der Arme 6A, 6B liegen im vollständig eingeschobenen Zustand des Verbinders 70 im zweiten Abschnitt 24 der Ausnehmung 16 im ersten Bauteil 12 und damit auf dem Hinterschnitt 26 auf und die freien Enden der Arme 8A, 8B liegen im vollständig eingeschobenen Zustand des Verbinders 70 im zweiten Abschnitt 34 der Ausnehmung 18 im zweiten Bauteil 14 und damit auf dem Hinterschnitt zwischen dem ersten Abschnitt 32 und dem zweiten Abschnitt 34 auf.

Fig. 18 zeigt einen Verbinder 80 gemäß einer achten Ausführungsform der Erfindung. Der Verbinder 80 weist in einer Seitenansicht eine angenähert W-artige Form auf und ist dadurch sehr ähnlich aufgebaut zum Verbinder 10 der Fig. 4. Lediglich die Formgebung der ersten federnden Arme 6A, 6B unterscheidet sich deutlich von der Formgebung der federnden Arme 6A, 6B des Verbinders 10.

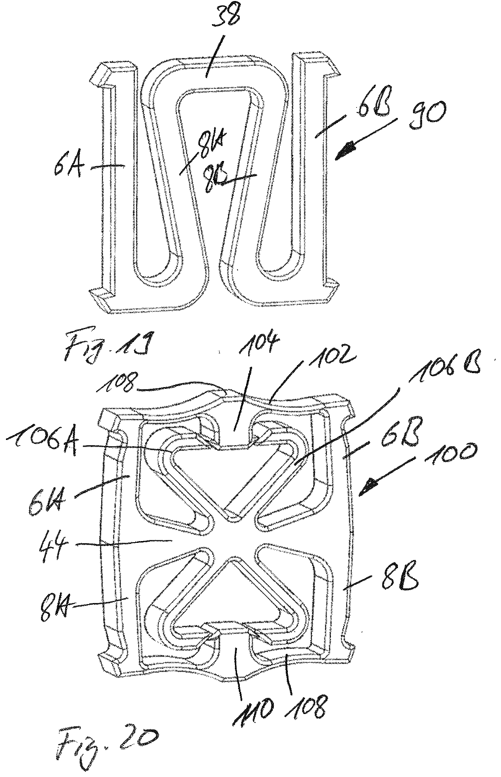

Fig. 19 zeigt einen Verbinder 90 gemäß einer neunten Ausführungsform der Erfindung. Auch der Verbinder 90 weist in einer Seitenansicht eine angenähert W-artige Form auf und ist dadurch ähnlich aufgebaut wie der Verbinder 10 der Fig. 4. Lediglich die Formgebung der federnden Arme 8A, 8B unterscheidet sich deutlich von den federnden Armen 8A, 8B des Verbinders 10. Die federnden Arme 8A, 8B laufen ausgehend von einer die federnden Arme 8A, 8B verbindenden Basis 38 aufeinander zu. Die federnden Arme 6A, 6B, die wiederum von den Enden der federnden Arme 8A, 8B ausgehen, sind hingegen geradlinig ausgebildet.

Fig. 20 zeigt einen Verbinder 100 gemäß einer zehnten Ausführungsform der Erfindung. Der Verbinder 100 weist zwei erste federnde Arme 6A, 6B auf, an deren jeweils freiem Ende jeweils eine Rastnase mit einer Klemmfläche ausgebildet ist. Der Verbinder 100 weist zweite federnde Arme 8A, 8B auf, an deren freiem Ende jeweils eine Rastnase mit einer Klemmfläche ausgebildet ist. Die federnden Arme 6A, 6B, 8A, 8B sind mittels einer Verbindungsstrebe 44 miteinander verbunden.

Die einander zugewandten freien Enden der federnden Arme 6A, 6B sind darüber hinaus mit einer Federstrebe 102 miteinander verbunden. Die Federstrebe 102 ist mittig mit einem Rastbauteil 104 versehen, das auf beiden Seiten mit jeweils einem Rasthaken versehen ist. Zwei weitere Rasthaken sind an federnden Armen 106A, 106B angeordnet. Die Federstrebe 102 ist mittig darüber hinaus mit einer Anschlagfläche 108 versehen, die über die jeweils obere Begrenzung der beiden Rastnasen an den federnden Armen 6A, 6B hinausragt.

Wird der Verbinder 100 in die Ausnehmung 16 im Bauteil 12 eingeschoben, so schlägt zunächst die Anschlagfläche 108 an dem in Fig. 2 oberen Ende der Ausnehmung 16 an. Die Anschlagfläche 108 wird beim weiteren Einschieben des Verbinders dann nach unten gedrückt. Dies ist möglich, da die Federstrebe zwischen der Anschlagfläche 108 und der jeweils seitlich angeordneten Rastnase nicht geradlinig, sondern konkav gekrümmt verläuft. Sobald die Rastnasen an den freien Enden der federnden Arme 6A, 6B in den zweiten Abschnitt 24 der Ausnehmung 16 eingeschnappt sind und die Klemmflächen an dem Hinterschnitt 26 anliegen, blockiert die dann gegenüber der Position der Fig. 20 leicht nach unten verschobene Federstrebe 102 eine Bewegung der Rastnasen nach innen, in Fig. 20 also aufeinander zu. Die Federstrebe wird in dieser Blockierposition dadurch gehalten, dass die Rasthaken an beiden Seiten des Rastbauteils 104 hinter die Rasthaken an den Rastarmen 106A, 106B geschnappt sind. Eine Bewegung der Federstrebe 102 nach oben wird dadurch blockiert. Die Klemmflächen an den Rastnasen an den freien Enden der federnden Arme 6A, 6B werden infolgedessen nicht nur durch die Federkraft der federnden Arme 6A, 6B in ihrer Position anliegend an dem Hinterschnitt 26 der Ausnehmung 16 gehalten, sondern in dieser Rastposition zusätzlich noch durch die Federstrebe 102 blockiert. Der Verbinder 100 ist dadurch zuverlässig und formschlüssig in der Ausnehmung 16 blockiert und kann aus der Ausnehmung 16 nur dadurch entfernt werden, dass entweder das Bauteil 12 mit der Ausnehmung 16 oder der Verbinder 100 zerstört wird.

Der Verbinder 100 ist symmetrisch aufgebaut und die Rastnasen an den freien Enden der federnden Arme 8A, 8B sind ebenfalls mittels einer Federstrebe 108 verbunden. Die Funktion der Federstrebe 108 ist gleich wie die bereits erläuterte Funktion der Federstrebe 102. Auch die Federstrebe 108 kann mittels eines Rastbauteils 110, das gleich aufgebaut ist wie das Rastbauteil 104, und an dem Rastbauteil 110 angreifender Rastarme in einer Position blockiert werden, in der eine Bewegung der Rastnasen an den freien Enden der federnden Arme 8A, 8B nach innen, also aufeinander zu, blockiert wird.

Mittels des Verbinders 100 können infolgedessen die beiden Bauteile 12, 14 formschlüssig und unlösbar aneinander gesichert werden.

## Patentansprüche

1. Verbinder zum Verbinden eines ersten Bauteils und eines zweiten Bauteils, insbesondere ausgebildet als Verleimhilfe zum Verbinden der Bauteile während des Verfestigens eines Klebstoffs im Bereich einer Klebefläche, wobei der Verbinder wenigstens zwei erste Klemmflächen und wenigstens zwei zweite Klemmflächen aufweist, wobei jede der Klemmflächen an jeweils einem federnden Arm angeordnet ist, wobei die ersten Klemmflächen der Verbinder an wenigstens einem Hinterschnitt des ersten Bauteils und die zweiten Klemmflächen an wenigstens einem Hinterschnitt des zweiten Bauteils eingreifen können, wobei die Verbinder und die Hinterschnitte im verbundenen Zustand der beiden Bauteile nicht von außerhalb der Bauteile sichtbar sind und wobei der Verbinder als einteiliges Bauteil, insbesondere als Kunststoffbauteil, ausgebildet ist.

2. Verbinder nach Anspruch 1, **dadurch gekennzeichnet, dass** die Klemmflächen wenigstens teilweise als Klemmschrägen ausgebildet sind.

3. Verbinder nach Anspruch 1 oder 2, **dadurch gekennzeichnet, dass** die Klemmflächen an Rastnasen ausgebildet sind.

4. Verbinder nach einem der vorstehenden Ansprüche, **dadurch gekennzeichnet, dass** wenigstens einer der federnden Arme von einem Endbereich eines anderen federnden Arms ausgeht, wobei insbesondere der Verbinder eine W-artige Form hat.

5. Verbinder nach Anspruch 1, 2 oder 3, **dadurch gekennzeichnet, dass** jeder der federnden Arme von einem Verbindungstück ausgeht.

6. Verbinder nach Anspruch 5, **dadurch gekennzeichnet, dass** das Verbindungsstück als Verbindungstrebe ausgebildet ist, wobei die Verbindungsstrebe senkrecht zu den federnden Armen angeordnet ist.

7. Verbinder nach Anspruch 5 oder 6, **dadurch gekennzeichnet, dass** mittig zwischen den zwei ersten federnden Armen und/oder mittig zwischen den zwei zweiten federnden Armen jeweils ein Anschlag angeordnet ist.

8. Verbinder nach wenigstens einem der vorstehenden Ansprüche, **dadurch gekennzeichnet, dass** zwei der federnden Arme einander gegenüberliegen, wobei Klemmflächen der federnden Arme voneinander weg gerichtet sind und wobei die Rückseiten der federnden Arme, die gegenüber den Klemmflächen liegen, mittels einer Federstrebe miteinander verbunden sind, wobei die Federstrebe in einer ersten Stellung eine Bewegung der federnden Arme aufeinander zu ermöglicht und in einer zweiten Stellung eine Bewegung der federnden Arme aufeinander zu blockiert, wobei insbesondere Rastmittel vorgesehen sind, um die Federstrebe in der zweiten Stellung relativ zu den federnden Armen zu blockieren.

9. Verbinder nach Anspruch 8, **dadurch gekennzeichnet, dass** die Federstrebe mit einem Tiefenanschlag verbunden ist, der beim Einschieben des Verbinders an einer Begrenzung der Ausnehmung anschlägt und der im weiteren Verlauf des Einschiebens die Federstrebe in die zweite Stellung bewegt.

10. Anordnung mit zwei Bauteilen und einem Verbinder nach wenigstens einem der vorstehenden Ansprüche, wobei jedes der Bauteile eine Ausnehmung mit wenigstens zwei einander gegenüberliegenden Hinterschnitten aufweist und wobei zwei Klemmflächen der Verbinder in die Hinterschnitte im ersten Bauteil und zwei Klemmflächen der Verbinder in die Hinterschnitte im zweiten Bauteil eingreifen.

11. Anordnung nach Anspruch 10, **dadurch gekennzeichnet, dass** die Ausnehmung eine T-artige Querschnittsform aufweist, wobei im Querschnitt ein erster Abschnitt, der von der Öffnung der Ausnehmung ausgeht, eine erste Breite hat und ein zweiter Abschnitt, der an den ersten Abschnitt anschließt, eine zweite Breite hat, wobei die zweite Breite größer ist als die erste Breite.

12. Anordnung nach Anspruch 10 oder 11, **dadurch gekennzeichnet, dass** auf die Verbindungsflächen der Bauteile Klebstoff aufgetragen ist.

13. Anordnung nach Anspruch 10, 11 oder 12, **dadurch gekennzeichnet, dass** die Klemmflächen an Rastnasen vorgesehen sind, wobei die Rastnasen in die Hinterschnitte eingreifen oder dass die Klemmflächen als Klemmschrägen ausgebildet sind, wobei die Klemmschrägen an den Hinterschnitten angreifen.

14. Verfahren zum Verbinden eines ersten Bauteils und eines zweiten Bauteils mit einem Verbinder nach einem der Ansprüche 1 bis 9, wobei jedes der Bauteile eine Ausnehmung mit jeweils wenigstens zwei Hinterschnitten aufweist, **gekennzeichnet durch** Einschieben des Verbinders in die Ausnehmung des ersten Bauteils, bis die Klemmflächen des Verbinders an den Hinterschnitten des ersten Bauteils angreifen und Einschieben des aus der Ausnehmung im ersten Bauteil herausragenden Abschnitts des Verbinders in die Ausnehmung des zweiten Bauteils, bis die Klemmflächen der Verbinder an den Hinterschnitten des zweiten Bauteils angreifen.

15. Verwendung eines Verbinders nach einem der Ansprüche 1 bis 9 als Verleimhilfe beim Verkleben zweier Bauteile.
